# EUROPÄISCHE PATENTSCHRIFT

(11) **EP 3 778 086 B1**
(45) Veröffentlichungstag und Bekanntmachung des Hinweises auf die Patenterteilung: **19.10.2022**
(21) Anmeldenummer: 19192062.8
(22) Anmeldetag: 16.08.2019
(51) Int. Cl.: B23D 57/00

(54) **VERARBEITUNGSMODUL FÜR EINE BAUPLATTE UND EIN VERFAHREN ZUM VERARBEITEN EINER BAUPLATTE**
BASE PLATE PROCESSING MODULE AND A METHOD FOR PROCESSING A BASE PLATE
MODULE DE TRAITEMENT POUR UNE PLAQUE DE BASE ET PROCÉDÉ DE TRAITEMENT D'UNE PLAQUE DE BASE

(43) Veröffentlichungstag der Anmeldung: 17.02.2021
(73) Patentinhaber: United Grinding Group Management AG, 3005 Bern (CH)
(72) Erfinder: CLOOTS, Michael, 9008 St. Gallen (CH); BRUNNER, Pascal, 9515 Hosenruck (CH); FRAUCHIGER, Alex, 9000 St.Gallen (CH); GUTKNECHT, Kai, 8730 Uznach (CH); PLÜSS, Christoph, 3400 Burgdorf (CH); SAUTTER, Hanspeter, 8112 Otelfingen (CH); HOCHREUTENER, Patrik, 8400 Winterthur (CH); MAAG, Vincent, 8037 Zürich (CH); LAUBER, Philipp, 9322 Egnach (CH)
(74) Vertreter: Maiwald Patent- und Rechtsanwaltsgesellschaft mbH

(56) Entgegenhaltungen:
- EP-A1- 3 360 636
- EP-A2- 2 835 194
- WO-A1-2017/158291
- DE-A1- 2 900 497
- ES-A1- 2 414 661
- US-A- 3 660 949
- US-A- 3 953 013
- ABOU-HANNA J ET AL: "FINITE ELEMENT APPROACH TO MODELING PARTICULATE BED FIXTURES", JOURNAL OF MANUFACTURING SYSTEMS, SOCIETY OF MANUFACTURING ENGINEERS, DEARBORN, MI, US, vol. 11, no. 1, 1 January 1992 (1992-01-01), pages 1-12, XP000262459, ISSN: 0278-6125

## Beschreibung

### Technisches Gebiet

Die vorliegende Erfindung betrifft ein Verarbeitungsmodul für eine Bauplatte nach dem Oberbegriff des Anspruchs 1 und ein Verfahren zum Verarbeiten einer Bauplatte nach dem Oberbegriff des Anspruchs 13. . Die Bauplatte kann eine plattenförmige Grundstruktur aufweisen, von der einzelne Bauelemente stiftförmig oder fingerförmig abstehen. Die einzelnen Bauelemente können nach einer Verarbeitung im Verarbeitungsmodul von der plattenförmigen Grundstruktur abgetrennt werden. Die einzelnen, abgetrennten Bauelemente können als zu fertigende Produkte verstanden werden.

### Hintergrund der Erfindung

Konventionelle Verarbeitungsmodule für Bauplatten sind große, hochkomplexe und umständliche Vorrichtungen, die trotzdem nur einen eingeschränkten Funktionsbereich haben. Die konventionellen Verarbeitungsmodule für Bauplatten können daher noch weiter verbessert werden.

Ein Verarbeitungsmodul nach dem Oberbegriff des Anspruchs 1 und ein Verfahren nach dem Oberbegriff des Anspruchs 13 sind der ES 2 414 661 A1 zu entnehmen.

Es ist wünschenswert ein einfacheres Verarbeitungsmodul zu schaffen. Weiterhin ist es wünschenswert ein Verarbeitungsmodul zu schaffen, welches mehr verschiedene Funktionen in sich vereint.

### Zusammenfassung der Erfindung

Es ist eine Aufgabe der vorliegenden Erfindung, ein verbessertes Verarbeitungsmodul für eine Bauplatte bereitzustellen, welches effektiver aufgebaut ist.

### SE

Diese Aufgabe wird durch ein Verarbeitungsmodul für eine Bauplatte und ein Verfahren zum Verarbeiten einer Bauplatte nach den unabhängigen Ansprüchen gelöst. Vorteilhafte Ausführungsformen und Weiterbildungen sind den Unteransprüchen und der nachfolgenden Beschreibung zu entnehmen.

Die vorliegende Erfindung umfasst ein Verarbeitungsmodul für eine Bauplatte mit einer Eingangsstation und einer Manövrierstation. Die Eingangsstation umfasst eine Aufnahme für eine Bauplatte und die Bauplatte bündelt mehrere einzelne Bauelemente. Die Manövrierstation umfasst eine Schwenkvorrichtung zum Transportieren und Schwenken der Bauplatte.

Das Verarbeitungsmodul für eine Bauplatte gemäß der vorliegenden Erfindung ist sehr elegant und einfach aufgebaut. Gleichzeitig kann es im Vergleich zu einem konventionellen Verarbeitungsmodul mehr verschiedene Funktionen in sich vereinen und/oder die verschiedenen Funktionen präziser erfüllen. Im Ergebnis ist das erfindungsgemäße Verarbeitungsmodul gegenüber dem Stand der Technik effektiver aufgebaut.

Die Bauplatte kann eine plattenförmige Grundstruktur aufweisen, von der die einzelnen Bauelemente stiftförmig oder fingerförmig abstehen. Die Bauplatte bzw. die plattenförmige Grundstruktur kann als eine Trägerstruktur oder Stützstruktur für die Bauelemente verstanden werden. Die einzelnen Bauelemente können nach einer Verarbeitung im Verarbeitungsmodul von der plattenförmigen Grundstruktur abgetrennt werden. Die einzelnen, abgetrennten Bauelemente können als das eigentlich zu fertigende Produkt verstanden werden. Die Bauplatte kann durch ein additives Fertigungsverfahren wie 3 D-Druck hergestellt sein.

Das Verarbeitungsmodul kann daher als Bauteilabtrennmodul verstanden werden. Darüber hinaus kann das Verarbeitungsmodul auch als ein kombiniertes Bauteilabtrenn- und Bauplattenwiederaufbereitungsmodul sein. Das Verarbeitungsmodul umfasst dann nicht nur die Eingangsstation und die Manövrierstation, sondern auch eine Bauplattenwiederaufbereitungsstation. Die Bauplattenwiederaufbereitungsstation kann eine mechanische Bearbeitung der Bauplatte nach dem Abtrennen der einzelnen Bauelemente ermöglichen und einen Fräskopf, einen Schleifkopf und/oder ähnliches umfassen. Nachdem die einzelnen Bauelemente von der plattenförmigen Grundstruktur der Bauplatte abgetrennt wurden, kann die Bauplatte relativ zu der Bauplattenwiederaufbereitungsstation verfahren und dort mechanisch bearbeitet werden. Das kann bedeuten, dass eine gewünschte Oberflächenbeschaffenheit (zum Beispiel Ebenheit oder Rauigkeit) der Bauplatte wiederhergestellt wird und/oder das eventuell bestehende Reste oder Stümpfe der Bauelemente entfernt werden.

Erfindungsgemäß umfasst das Verarbeitungsmodul weiterhin ein druckgasbeaufschlagbares Granulatbad zur Aufnahme und Fixierung der einzelnen Bauelemente relativ zu der Bauplatte. Das Granulatbad ist in einem Ruhezustand in einem quasi festen Zustand und bei Beaufschlagung mit Druckgas (zum Beispiel Druckluft oder ein inertes Gas unter Druck oder ähnliches) in einem quasi flüssigen Zustand.

Das Granulatbad kann sich in einem Bauelementauffangbehälter befinden. Der Bauelementauffangbehälter kann mithilfe der Schwenkvorrichtung relativ zur Bauplatte mit den einzelnen Bauelementen angehoben werden, sodass die einzelnen Bauelemente an der Bauplatte in das Granulatbad eintauchen, wobei das Granulatbad dabei mit Druckgas beaufschlagt wird und daher in einem quasi flüssigen Zustand ist. Das im Ruhezustand als fest wahrnehmbare Granulatbad wird während des Eintauchens der Bauelemente mit Druckgas durchgespült, sodass es einen als flüssig wahrnehmbaren Zustand einnimmt, in dem die Bauelemente ohne große Reibungsverluste eintauchen können. In der Folge tauchen die an der Bauplatte angeordneten einzelnen Bauelemente in den Bauelementauffangbehälter bzw. das quasi flüssige Granulat ein.

Das Druckgas kann abgestellt werden, wenn die Bauelemente zumindest teilweise oder bevorzugt vollständig in das Granulat eingetaucht sind bzw. der Bauelementauffangbehälter seine finale Position erreicht hat. Ohne die Druckgasspülung verfestigt sich das Granulat so weit, dass die Bauelemente in dem Granulat ausreichend fixiert sind, um zum Beispiel von den entstehenden Prozesskräften oder Scherkräften in einem sich anschließenden Trennprozess nicht verschoben oder mitgerissen zu werden.

Die einzelnen Bauelemente können von der Bauplatte mithilfe der Sägevorrichtung abgetrennt werden. Erfindungsgemäß umfasst das Verarbeitungsmodul daher eine Sägevorrichtung mit einem Schneiddraht zum Abtrennen der einzelnen Bauelemente von der Bauplatte. Der Schneiddraht kann ein Hartstoffdraht sein, zum Beispiel aus Diamant, Bornitrid, CBN (kubisch kristallines Bornitrid) oder ähnlichem. In einer Ausführungsform ist die Sägevorrichtung eine Drahtsäge mit einem Hartstoffdraht, zum Beispiel eine Diamantdrahtsäge oder eine Bornitrid- oder CBN-Säge. Die Sägevorrichtung bzw. der Schneiddraht der Sägevorrichtung kann parallel zur Oberfläche der Bauplatte geführt werden.

Die Sägevorrichtung funktioniert, in dem der Schneiddraht auf- und abgewickelt wird. Erfindungsgemäß umfasst die Sägevorrichtung daher eine Antriebsspule und eine Gegenspule, wobei die Antriebsspule zum Wickeln des Schneiddrahts in eine erste Richtung gestaltet ist und die Gegenspule zum Spannen des Schneiddrahts in eine entgegengesetzte, zweite Richtung gestaltet ist. In anderen Worten, der Schneiddraht kann auf die Antriebsspule in der ersten Bewegungsrichtung (zum Beispiel gegen den Uhrzeigersinn) mit einem ersten Drehmoment aufgewickelt werden. Dabei bestimmt die aufwickelnde Achse der Antriebsspule die Winkelgeschwindigkeit oder Spulendrehzahl der Antriebsspule. Die Gegenspule, welche zum Abwickeln des Schneiddrahts in der zweiten, entgegengesetzten Bewegungsrichtung (zum Beispiel im Uhrzeigersinn) gestaltet ist, kann ein definiertes Gegendrehmoment oder zweites Drehmoment bei einer weiteren Winkelgeschwindigkeit oder Spulendrehzahl der Gegenspule bewirken. Die Schnittgeschwindigkeit des Schneiddrahts kann durch eine Geschwindigkeitsregelung mit Feedbacksignal der Drahtgeschwindigkeit an einer mit einem Geschwindigkeitssensor versehenen Umlenkrolle gemessen und, wenn gewünscht, konstant gehalten werden. Die Schnittgeschwindigkeit ist frei einstellbar, auch während eines Schneidvorgangs.

Das Gegendrehmoment der Gegenspule kann permanent geregelt werden, um eine konstante Drahtspannung des Schneiddrahts zu bewirken. Das für die konstante Drahtspannung im Schneiddraht notwendige Gegendrehmoment der Gegenspule kann aus dem momentanen Gesamtspulendurchmesser der abwickelnden Gegenspule berechnet werden. Unter Gesamtspulendurchmesser der abwickelnden Gegenspule kann die Summe aus Spulendurchmesser der Gegenspule und Durchmesser des momentan aufgewickelten Schneiddrahts verstanden werden. Dieser momentane Gesamtspulendurchmesser der Gegenspule kann aus der aktuellen Drahtgeschwindigkeit und der aktuellen Spulendrehzahl der Gegenspule berechnet werden. Die aktuelle Drahtgeschwindigkeit oder Schnittgeschwindigkeit des Schneiddrahts kann von einem Geschwindigkeitssensor oder Encoder in einer der Spulen oder einer Umlenkrolle ermittelt werden. Die aktuelle Spulendrehzahl der Gegenspule kann durch einen Drehzahlsensor oder Encoder in der Gegenspule ermittelt werden.

In einer Ausführungsform umfasst das Verarbeitungsmodul daher einen Geschwindigkeitssensor zur Erfassung einer momentanen Schnittgeschwindigkeit des Schneiddrahts, wobei der Geschwindigkeitssensor zum Beispiel an einer Umlenkrolle der Sägevorrichtung angeordnet ist.

In einer Ausführungsform umfasst das Verarbeitungsmodul weiterhin einen Drehzahlsensor zur Erfassung einer momentanen Spulendrehzahl der Gegenspule.

In einer Ausführungsform umfasst das Verarbeitungsmodul weiterhin eine Steuereinheit, die zum Steuern zumindest einer der Spulen für eine konstante Drahtspannung des Schneiddrahts während eines Schneidvorgangs gestaltet ist. Die Steuereinheit kann aus der momentanen Schnittgeschwindigkeit des Schneiddrahts und der momentanen Spulendrehzahl der Gegenspule den momentanen Gesamtspulendurchmesser der Gegenspule mitsamt momentan aufgewickeltem Schneiddraht berechnen. Aus dem momentanen Gesamtspulendurchmesser der Gegenspule kann die Steuereinheit kontinuierlich ein gewünschtes Antriebsmoment der Gegenspule für eine konstante Drahtspannung des Schneiddrahts während eines Schneidvorgangs berechnen. In anderen Worten, die Steuereinheit verwendet das berechnete Antriebsmoment der Gegenspule zur Steuerung einer konstanten Drahtspannung des Schneiddrahts während eines Schneidvorgangs. Die Steuereinheit kann das berechnete Antriebsmoment der Gegenspule ebenso zur Steuerung einer konstanten Schnittgeschwindigkeit des Schneiddrahts während eines Schneidvorgangs verwenden.

In einer Ausführungsform ist zumindest eine der Spulen gestaltet, um eine definierte konstante Drahtspannung des Schneiddrahts auch in einem Ruhezustand der Sägevorrichtung einzuhalten. Die Steuereinheit kann zumindest die Gegenspule so steuern, dass die Drahtspannung des Schneiddrahts permanent und damit auch im ruhenden Zustand der Sägevorrichtung konstant bleibt. Mithilfe einer permanent anliegenden Drahtspannung wird ein Einrichten der Sägevorrichtung zum Beispiel nach einem Drahtbruch erleichtert.

In einer Ausführungsform sind die Antriebsspule und die Gegenspule zum zyklischen Wechsel ihrer Aufgaben bzw. zum Wechsel der Schneidrichtung gestaltet, sodass der Schneiddraht zum Schneiden abwechselnd in die erste Richtung und die zweite Richtung gewickelt wird. Ein Wechsel der Schneidrichtung bedeutet, dass die bisher aufwickelnde Spule abwickelt und die bisher abwickelnde Spule aufwickelt. Die Steuereinheit kann zumindest eine der Spulen so steuern, dass die Drahtspannung des Schneiddrahts permanent und damit auch bei einem Wechsel der Schneidrichtung konstant bleibt.

Die Antriebsspule und die Gegenspule können jeweils in einer eigenen Sägeeinheit angeordnet sein. Die beiden Sägeeinheiten können unabhängig voneinander linear verschieblich sein. Mithilfe von zum Beispiel Induktivsensoren kann die Verschiebung der Sägeeinheiten so geregelt werden, dass unterschiedliche Schneidewinkel möglich sind.

Der Schneiddraht kann mehrere Kilometer lang sein. Während des Sägevorgangs kann der Schneiddraht jedoch nicht in seiner vollen Länge auf und abgewickelt werden, sondern nur ein bestimmter Drahtabschnitt, der nur wenige 100 m lang sein kann. Bevorzugt werden nur zwischen 1 und 10 % der Gesamtlänge des Schneiddrahts für einen aktuellen Schnittvorgang eingesetzt, weiter bevorzugt zwischen 1 und 5 % der Gesamtlänge des Schneiddrahts.

Um den Schneiddraht möglichst geordnet und verschleißfrei auf- und wieder abzuwickeln, können die Antriebsspule und die Gegenspule gegeneinander auf und ab bewegt werden. Erfindungsgemäß umfasst das Verarbeitungsmodul daher eine Pendelvorrichtung für die Antriebsspule und/oder die Gegenspule. Die Pendelvorrichtung ist gestaltet, um die Antriebsspule und/oder die Gegenspule im Wesentlichen senkrecht zu einer Schnittrichtung des Schneiddrahts auf und ab zu bewegen. In einer Ausführungsform ist die Pendelvorrichtung gestaltet, um die Bewegung der Antriebsspule und/oder der Gegenspule in Abhängigkeit von einer momentanen Schnittgeschwindigkeit des Schneiddrahts zu steuern. Erfindungsgemäß ist die Pendelvorrichtung gestaltet, um die Antriebsspule und/oder die Gegenspule unabhängig voneinander zu bewegen, sodass unterschiedliche Schneidwinkel einstellbar sind.

In einer Ausführungsform umfasst das Verarbeitungsmodul weiterhin eine Verschleißüberwachungsvorrichtung, die gestaltet ist um eine Schnittkraft des Schneiddrahts während eines Schneidvorgangs zu messen und auf Grundlage der gemessenen Schnittkraft eine Aussage über einen aktuellen Verschleiß des Schneiddrahts auszugeben. Aus einer zunehmenden Schnittkraft lässt sich ein zunehmender Drahtverschleiß ableiten. Ab einem bestimmten Drahtverschleiß kann ein bisher ungenutzter Drahtabschnitt verwendet werden. Dies kann so lange wiederholt werden, bis alle Drahtabschnitte im Eingriff waren. Der Schneiddraht unterliegt damit einem abschnittsweisen Verschleiß.

In einer Ausführungsform umfasst das Verarbeitungsmodul weiterhin eine Drahtbruchüberwachungsvorrichtung, die gestaltet ist, um eine Spulendrehzahl der Antriebsspule und/oder eine Spulendrehzeit der Gegenspule zu messen und auf Grundlage der gemessenen Spulendrehzahl eine Aussage über einen möglichen Drahtbruch auszugeben. Auf diese Weise werden beim Schneiden bzw. Sägen die Geschwindigkeiten von vorzugsweise beiden Spulen beobachtet, wodurch ein möglicher Drahtbruch sofort erkannt werden kann.

Nach dem Abtrennen der Bauelemente von der Bauplatte kann eine Wiederaufbereitung der Bauplatte erfolgen. Dazu kann eine Bauplattenwiederaufbereitungsstation oder Bauplattenwiederaufbereitungsvorrichtung relativ zu der Bauplatte verfahren werden. Vorzugsweise ist die Bauplattenwiederaufbereitungsstation kopfüber gelagert und fährt unter die Bauplatte. Die Wiederaufbereitung ist eine mechanische Bearbeitung der Bauplatte durch zum Beispiel Fräsen, Schleifen, Polieren und Ähnliches. Die mechanische Bearbeitung oder Nachbearbeitung der Bauplatte kann so lange durchgeführt werden, bis eine gewünschte Oberflächenqualität und/oder Planparallelität der Bauplatte erreicht ist.

Die vorliegende Erfindung umfasst weiterhin ein Verfahren zum Verarbeiten einer Bauplatte mit der Kombination von Merkmalen des Anspruchs 13. Das Verfahren umfasst u.a. die folgenden Schritte:
- Bereitstellen eines Verarbeitungsmoduls mit einer Eingangsstation und einer Manövrierstation,
- Einbringen einer Bauplatte in eine Aufnahme der Eingangsstation, wobei die Bauplatte mehrere einzelne Bauelemente bündelt, und
- Transportieren und/oder Schwenken der Bauplatte mithilfe einer Schwenkvorrichtung in der Manövrierstation.

Im Detail kann das Verfahren zum Verarbeiten einer Bauplatte einen oder mehrere der folgenden Schritte umfassen:
- Einlegen einer Bauplatte in einen Baubehälter.

Die Bauplatte kann eine plattenförmige Grundstruktur aufweisen, von der die einzelnen Bauelemente stiftförmig oder fingerförmig abstehen. Die Bauplatte kann durch 3D Drucken hergestellt und gegebenenfalls von Pulverresten gereinigt sein. Der Baubehälter kann eine zumindest teilweise nach oben und gegebenenfalls auch nach unten offene kastenförmige Form aufweisen. Der Baubehälter kann rahmenförmig sein.
- Positionieren des Baubehälters in eine Aufnahme in der Eingangsstation mithilfe eines mobilen Transporthilfsmittels.

Die Aufnahme kann ein (erster) linear verfahrbarer Tisch ein. Die Aufnahme bzw. der Tisch kann zum Beispiel mithilfe eines Dorns mit einem Bauplattenspannsystem linear verfahrbar sein. Das Transporthilfsmittel kann manuell oder automatisch verfahrbar sein.
- Verfahren des Tisches samt Baubehälter von der Eingangsstation in die Manövrierstation mithilfe des Dorns und des Spannsystems.
- Greifen und Anheben des Baubehälters vom Tisch mithilfe einer Schwenkvorrichtung.

Die Schwenkvorrichtung kann als eine Handlingseinheit mit Schwenkmechanismus verstanden werden. Das Anheben des Baubehälters vom Tisch ist ausreichend, wenn kein Kontakt zwischen dem Baubehälter und dem Tisch besteht.
- Verfahren des Tisches (ohne Baubehälter) von der Manövrierstation zurück in die Eingangsstation.

Der Dorn mit Spannsystem liegt nun frei, sodass die Schwenkvorrichtung den Baubehälter über dem Dorn mit Spannsystem absetzen kann.
- Absenken des Baubehälters auf den Dorn und das Spannsystem mithilfe der Schwenkvorrichtung.

Ist der Baubehälter unten zumindest teilweise offen, kann der Dorn innerhalb des Baubehälters bis direkt an die Unterseite der Bauplatte angenähert werden. Es kann auch eine zusätzliche, optionale Grundplatte zwischen dem Dorn und der Unterseite der plattenförmigen Grundstruktur der Bauplatte vorgesehen sein.
- Befestigen der Bauplatte gegebenenfalls mithilfe der Grundplatte an dem Dorn und dem Spannsystem durch die zumindest teilweise Öffnung im Bodenbereich des Baubehälters.

Das Spannsystem ist so auf dem Dorn angeordnet, dass die Bauplatte oder gegebenenfalls die Grundplatte einfach mit dem Dorn verbunden werden kann.
- Absenken des Baubehälters relativ zu der Bauplatte und/oder Anheben der Bauplatte relativ zum Baubehälter mithilfe der Schwenkvorrichtung.

Da der Dorn mit Spannsystem entweder direkt oder mithilfe der Grundplatte fest mit der Bauplatte verbunden ist, wird während der Relativbewegung zwischen Bauplatte und Baubehälter die Bauplatte durch den Dorn innerhalb des Baubehälters in eine angehobene Position gefahren.

In der angehobenen Position ragt die Bauplatte mitsamt den einzelnen Bauelementen (bevorzugt vollständig) aus dem Baubehälter heraus.
- Lösen der Schwenkvorrichtung von dem Baubehälter.

Der Baubehälter kann sich nun in der niedrigsten möglichen Position befinden. Die Schwenkvorrichtung kann nun auf die Höhe der freigelegten Bauplatte verfahren.
- Lösen der Bauplatte von der Grundplatte.

Für das Lösen der Bauplatte von der optionalen Grundplatte kann der Dorn mit Spannsystem einen Auslösemechanismus umfassen. Die Bauplatte kann nun von der Grundplatte angehoben werden.
- Greifen der Bauplatte mithilfe der Schwenkvorrichtung.

Nachdem die Schwenkvorrichtung auf die Höhe der freigelegten Bauplatte verfahren ist, kann sie die Bauplatte zum Beispiel seitlich fassen.
- Weiteres Anheben der Bauplatte mithilfe der Schwenkvorrichtung.

Die Bauplatte kann so weit angehoben werden, dass der linear verfahrbare Tisch unter die Bauplatte gefahren werden kann.
- Verfahren des Tisches von der Eingangsstation zurück in die Manövrierstation und unter die Bauplatte mithilfe des Dorns und des Spannsystems.

Der Tisch dient nun zum Abdecken des Dorns und des Spannsystems zum Schutz gegen Staub oder Pulverreste.
- Schwenken der Bauplatte mithilfe der Schwenkvorrichtung, sodass die Bauplatte einer Adapterplatte zugewandt und die einzelnen Bauelemente von der Adapterplatte abgewandt sind.

Die Bauplatte wird dabei so weit angehoben, dass das Schwenken oder Drehen oberhalb des Tisches möglich wird. Das Schwenken kann ein Schwenken um 180° sein. Wie oben festgestellt, schützt der Tisch nun den Dorn und das Spannsystem vor Kontamination durch herabfallende Pulverreste von der Bauplatte mit den einzelnen Bauelementen. Die Schwenkvorrichtung verfährt die Bauplatte unter die Adapterplatte.
- Befestigen der Bauplatte an der Adapterplatte mithilfe eines Fixiersystems.

Die Befestigung kann ausreichend stark sein, um ein nachfolgendes Abtrennen der einzelnen Bauelemente von der Bauplatte und gegebenenfalls auch eine Bauplattenwiederaufbereitung zu ermöglichen.
- Lösen der Schwenkvorrichtung von der Bauplatte.
- Verfahren einer Ablage mit einem Bauelementauffangbehälter unter die Bauplatte, wobei der Bauelementauffangbehälter ein Granulatbad umfasst.

Die Ablage kann der oben beschriebene, erste linear verfahrbare Tisch oder ein zusätzlicher zweiter linear verfahrbarer Tisch sein. Die Ablage bzw. der linear verfahrbare Tisch sichert die einzelnen Bauelemente während und nach einem Abtrennprozess von der Bauplatte. Dazu verfährt die Ablage mit dem darauf angeordneten Bauelementauffangbehälter unter die Bauplatte, die an der Adapterplatte befestigt ist.
- Greifen und Anheben des Bauelementauffangbehälters mithilfe der Schwenkvorrichtung, sodass die einzelnen Bauelemente an der Bauplatte in das Granulatbad eintauchen, wobei das Granulatbad dabei mit Druckgas beaufschlagt wird und in einem quasi flüssigen Zustand ist.

Die Schwenkvorrichtung greift den Bauelementauffangbehälter und hebt diesen an. In der Folge tauchen die an der Bauplatte angeordneten einzelnen Bauelemente in den Bauelementauffangbehälter ein, der mit dem Granulat befüllt ist. In einer finalen Position sind die Bauelemente vorzugsweise vollständig in das Granulat eingetaucht. Damit die Bauelemente ohne große Reibungsverluste in das Granulatbad eintauchen, wird das Granulatbad während des Eintauchens (bevorzugt von unten) mit Druckgas (zum Beispiel Druckluft) angespült. Als Folge davon nimmt das Granulatbad einen als flüssig wahrnehmbaren Zustand ein. Während dieses Zustandes können die einzelnen, an der Bauplatte angeordneten Bauelemente ohne großen Widerstand in das Granulatbad eintauchen.
- Beenden der Druckgasspülung des Granulatbads, sodass das Granulatbad in einem quasi festen Zustand ist und die einzelnen Bauelemente an der Bauplatte fixiert sind.

Das Druckgas kann abgestellt werden, wenn die Bauelemente zumindest teilweise oder bevorzugt vollständig in das Granulat eingetaucht sind bzw. der Bauelementauffangbehälter seine finale Position erreicht hat. Ohne die Druckgasspülung verfestigt sich das Granulat so weit, dass die Bauelemente in dem Granulat ausreichend fixiert sind, um zum Beispiel von den entstehenden Prozesskräften oder Scherkräften in einem sich anschließenden Trennprozess nicht verschoben oder mitgerissen zu werden.

Die Sägevorrichtung ist vorzugsweise eine Diamantdrahtsäge. Die Sägevorrichtung bzw. der Draht der Sägevorrichtung kann parallel zur Oberfläche der Bauplatte geführt werden. Die Sägevorrichtung bzw. der Draht der Sägevorrichtung kann mit einer pendelnden Bewegung durch das Material geführt werden.

Die Sägevorrichtung bzw. der Draht der Sägevorrichtung bzw. der Trennschnitt wird vorzugsweise möglichst nahe an einer Anschlussstelle zwischen Bauelement und Bauplatte erfolgen, in anderen Worten am Übergang zwischen der Bauplatte und den einzelnen Bauelementen. Dies hat den Vorteil, dass nach dem Abtrennen der Bauelemente nur minimale Bauelementreste an der Bauplatte bzw. Bauplattenreste an den Bauelementen verbleiben bzw. überstehen. Die Sägevorrichtung bzw. der Draht der Sägevorrichtung bzw. der Trennschnitt kann auch mit einem definierten Abstand von der Bauplatte geführt werden.
- Absenken des Bauelementauffangbehälters mithilfe der Schwenkvorrichtung.

Der Bauelementauffangbehälter enthält die gerade abgetrennten einzelnen Bauelemente. Der Bauelementauffangbehälter wird so weit abgesenkt, dass er auf die bereits wartende Ablage bzw. den (zweiten) linear verfahrbaren Tisch abgesetzt werden kann.
- Absetzen des Bauelementauffangbehälters auf der Ablage.
- Verfahren der Ablage mit dem Bauelementauffangbehälter aus der Manövrierstation in eine Ausgangsstation.

Die Ablage bzw. der zweite linear verfahrbare Tisch fährt mit samt dem Bauelementauffangbehälter in seine Ursprungsposition außerhalb des Verarbeitungsmoduls. In dieser Position kann der Bauelementauffangbehälter mit samt den einzelnen Bauelementen zum Beispiel mithilfe eines Transporthilfsmittels zu einem anschließenden Prozess transportiert werden.
- Ausgeben des Bauelementauffangbehälters mit den einzelnen Bauelementen aus der Ausgangsstation mithilfe des mobilen Transportmittels.

Nach dem Abtrennen der Bauelemente und dem Ausschleusen der Bauelemente aus dem Verarbeitungsmodul kann eine Wiederaufbereitung der an der Adapterplatte befestigten Bauplatte folgen.
- Verfahren einer Bauplattenwiederaufbereitungsstation relativ zu der an der Adapterplatte befestigten Bauplatte.

Für die Wiederaufbereitung der Bauplatte verfährt vorzugsweise eine kopfüber gelagerte Bauplattenwiederaufbereitungsstation unter die Bauplatte.
- Mechanische Bearbeitung der Bauplatte mithilfe der Bauplattenwiederaufbereitungsstation.

Die mechanische Bearbeitung oder Nachbearbeitung der Bauplatte kann so lange durchgeführt werden, bis eine gewünschte Oberflächenqualität und/oder Planparallelität der Bauplatte erreicht ist. Die mechanische Bearbeitung oder Nachbearbeitung kann ein Fräsen, Schleifen, Polieren oder ähnliches sein.
- Greifen der Bauplatte mithilfe der Schwenkvorrichtung.

Nach Abschluss der Bauplattenwiederaufbereitung greift die Schenkvorrichtung die Bauplatte.
- Lösen der Bauplatte von der Adapterplatte.

Dabei wird das Spannsystem, welches die nun wiederaufbereitete Bauplatte an der Adapterplatte hielt, gelöst.
- Schwenken und/oder Transportieren der Bauplatte mithilfe der Schwenkvorrichtung zurück in den Baubehälter.

Die wiederaufbereitete Bauplatte, jetzt ohne die einzelnen Bauelemente, wird von der Schwenkvorrichtung zurück zum wartenden Baubehälter verfahren. Die Bauplatte kann von der Schwenkvorrichtung bevorzugt wieder um 180° gedreht werden, sodass sie in ihrer ursprünglichen Lage auf den wartenden Baubehälter abgesetzt werden kann.
- Lösen der Schwenkvorrichtung von der Bauplatte.

Nach dem Absetzen der Bauplatte auf dem Baubehälter und einem Befestigen der Bauplatte gegebenenfalls an der Grundplatte des Baubehälters kann die Schwenkvorrichtung von der Bauplatte gelöst werden.
- Greifen des Baubehälters mithilfe der Schwenkvorrichtung.

Die Ablage bzw. der zweite linear verfahrbare Tisch gibt den Baubehälter wieder frei. Die Schwenkvorrichtung greift den Baubehälter samt fixierter Bauplatte und hebt den Baubehälter so weit an, dass der erste linear verfahrbare Tisch unter den Baubehälter gefahren werden kann, sodass die Schwenkvorrichtung den Baubehälter auf dem ersten linear verfahrbaren Tisch absetzen kann.
- Positionieren des Baubehälters auf dem ersten linear verfahrbaren Tisch mithilfe der Schwenkvorrichtung.

Nach dem Absetzen des Baubehälters auf dem ersten linear verfahrbaren Tisch kann der Tisch samt Baubehälter und wiederaufbereiteter Bauplatte in seine ursprüngliche Position außerhalb des Verarbeitungsmoduls fahren.
- Verfahren des Tisches mit dem Baubehälter und der Bauplatte von der Manövrierstation zurück in die Eingangsstation.

Von hier kann der Baubehälter von einem Transportmittel für Baubehälter aufgenommen werden.

Weitere Merkmale, Vorteile und Anwendungsmöglichkeiten der vorliegenden Erfindung ergeben sich aus der nachfolgenden Beschreibung, den Ausführungsbeispielen und den Figuren. In den Figuren stehen gleiche Bezugszeichen für gleiche oder ähnliche Objekte.

### Kurze Beschreibung der Figuren

- Figur 1: zeigt ein Verarbeitungsmodul für eine Bauplatte gemäß einer Ausführungsform der Erfindung.
- Figur 2: zeigt eine Detailansicht einer Sägevorrichtung zum Abtrennen einzelner Bauelemente von der Bauplatte.
- Figur 3: zeigt eine Aufsicht auf die Sägevorrichtung zum Abtrennen einzelner Bauelemente von der Bauplatte.

### Detaillierte Beschreibung der Ausführungsbeispiele

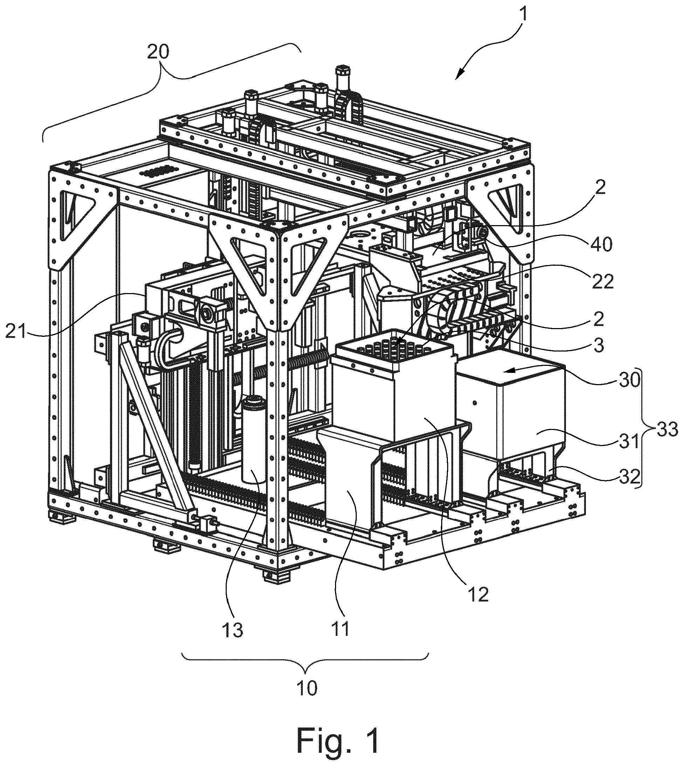

**Figur** 1 zeigt ein Verarbeitungsmodul 1 für eine Bauplatte 2 mit einer Eingangsstation 10 und einer Manövrierstation 20. Die Eingangsstation 10 umfasst eine Aufnahme 11 für eine Bauplatte 2. Die Manövrierstation 20 umfasst eine Schwenkvorrichtung 21 zum Transportieren und Schwenken der Bauplatte 2.

Die Bauplatte 2 bündelt mehrere einzelne Bauelemente 3. Die Bauplatte 2 kann eine plattenförmige Grundstruktur aufweisen, von der die einzelnen Bauelemente 3 stiftförmig oder fingerförmig abstehen. Die einzelnen, später abgetrennten Bauelemente 3 können als die eigentlich zu fertigende Produkte verstanden werden.

Das Verarbeitungsmodul 1 umfasst ein druckgasbeaufschlagbares Granulatbad 30 zur Aufnahme und Fixierung der einzelnen Bauelemente 3 relativ zu der Bauplatte 2. Das Granulatbad 30 ist in einem Ruhezustand in einem quasi festen Zustand und bei Beaufschlagung mit Druckgas in einem quasi flüssigen Zustand. Das Granulatbad 30 befindet sich in einem Bauelementauffangbehälter 31. Der Bauelementauffangbehälter wird mithilfe der Schwenkvorrichtung 21 relativ zur Bauplatte 2 mit den einzelnen Bauelementen 3 angehoben, sodass die einzelnen Bauelemente 3 an der Bauplatte 2 in das Granulatbad 30 eintauchen. Das als fest wahrnehmbare Granulatbad 30 wird während des Eintauchens der Bauelemente 3 mit Druckgas durchgespült, sodass es einen als flüssig wahrnehmbaren Zustand einnimmt, in dem die Bauelemente 3 ohne große Reibungsverluste eintauchen können. In der Folge tauchen die an der Bauplatte 2 angeordneten einzelnen Bauelemente 3 in den Bauelementauffangbehälter 31 bzw. das quasi flüssige Granulat ein. Das Druckgas wird abgestellt, wenn die Bauelemente 3 zumindest teilweise oder bevorzugt vollständig in das Granulat eingetaucht sind. Ohne die Druckgasspülung verfestigt sich das Granulat so weit, dass die Bauelemente 3 in dem Granulat ausreichend fixiert sind, um von den entstehenden Scherkräften in einem sich anschließenden Trennprozess nicht verschoben oder mitgerissen zu werden. Das Granulatbad 30 wird weiter unten detaillierter beschrieben.

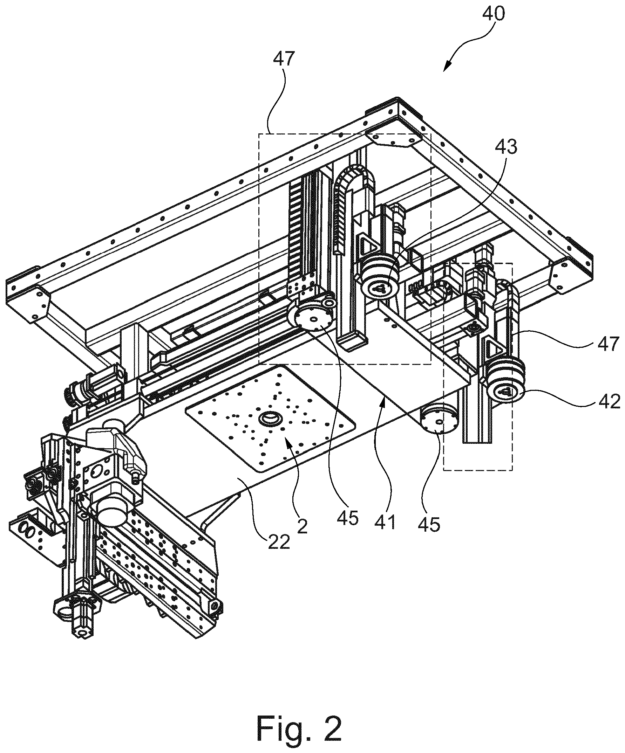

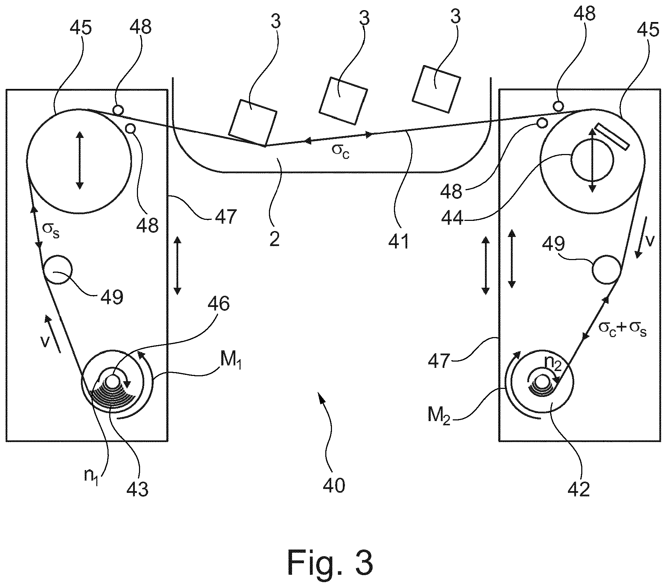

Die einzelnen Bauelemente 3 werden anschließend mithilfe einer Sägevorrichtung 40 von der Bauplatte 2 abgetrennt. Das Verarbeitungsmodul 1 umfasst daher weiterhin die Sägevorrichtung 40 mit einem Schneiddraht 41 zum Abtrennen der einzelnen Bauelemente 3 von der Bauplatte 2. Die Sägevorrichtung 40 ist hier eine Diamantdrahtsäge, bei der der Schneiddraht 41 parallel zur Oberfläche der Bauplatte 2 geführt wird. Die Sägevorrichtung 40 auf wird weiter unten detaillierter mit Bezug zu den Figuren 2 und 3 erläutert.

Nach dem Abtrennen der Bauelemente 3 von der Bauplatte 2 folgt eine Wiederaufbereitung der Bauplatte 2. Dazu wird eine kopfüber gelagerte Bauplattenwiederaufbereitungsstation relativ zu der Bauplatte 2 verfahren. Die Wiederaufbereitung ist eine mechanische Bearbeitung der Bauplatte 2 durch zum Beispiel Fräsen, Schleifen, Polieren und Ähnliches. Die Bauplattenwiederaufbereitungsstation wird weiter unten detaillierter beschrieben.

Der Ablauf im Verarbeitungsmodul 1 kann wie folgt sein:
- Einlegen einer Bauplatte 2 in einen Baubehälter 12.
- Positionieren des Baubehälters 12 auf einer Aufnahme 11 bzw. einem Tisch 11 in der Eingangsstation 10 mithilfe eines mobilen Transporthilfsmittels.
- Verfahren des Tisches 11 samt Baubehälter 12 von der Eingangsstation 10 in die Manövrierstation 20 mithilfe eines Dorns 13 mit einem Bauplattenspannsystem.
- Greifen und Anheben des Baubehälters 12 vom Tisch 11 mithilfe einer Schwenkvorrichtung 21.
- Verfahren des Tisches 11 (ohne Baubehälter) von der Manövrierstation 20 zurück in die Eingangsstation 10. Der Dorn 13 mit Spannsystem liegt nun frei.
- Absenken des Baubehälters 12 auf den Dorn 13 und das Spannsystem mithilfe der Schwenkvorrichtung 21. Der Dorn 13 kann innerhalb des Baubehälters 12 bis direkt an die Unterseite der Bauplatte 2 angenähert werden. Es kann eine optionale Grundplatte zwischen dem Dorn und der Unterseite der plattenförmigen Grundstruktur der Bauplatte 2 angeordnet sein.
- Befestigen der Bauplatte 2 oder der optionalen Grundplatte gegebenenfalls mithilfe eines Spannsystems an dem Dorn 13 und dem Spannsystem durch eine Öffnung im Bodenbereich des Baubehälters 12.
- Absenken des Baubehälters 12 relativ zu der Bauplatte 2 und/oder Anheben der Bauplatte 2 relativ zum Baubehälter 12 mithilfe der Schwenkvorrichtung 21. Während der Relativbewegung zwischen Bauplatte 2 und Baubehälter 12 wird die Bauplatte 2 durch den Dorn 13 innerhalb des Baubehälters 12 in eine angehobene Position gefahren.
- Lösen der Schwenkvorrichtung 21 von dem Baubehälter 12.
- Gegebenenfalls Lösen der Bauplatte 2 von der optionalen Grundplatte.
- Greifen der Bauplatte 2 mithilfe der Schwenkvorrichtung 21.
- Anheben der Bauplatte 2 mithilfe der Schwenkvorrichtung 21.
- Verfahren des Tisches 11 von der Eingangsstation 10 zurück in die Manövrierstation 20 und unter die Bauplatte 2 mithilfe des Dorns 13 und des Spannsystems. Der Tisch 11 dient zum Abdecken des Dorns 13 und des Spannsystems zum Schutz gegen Staub oder Pulverreste.
- Schwenken der Bauplatte 2 mithilfe der Schwenkvorrichtung 21, sodass die Bauplatte 2 einer Adapterplatte 22 zugewandt und die einzelnen Bauelemente 3 von der Adapterplatte 22 abgewandt sind. Die Bauplatte 2 wird dabei so weit angehoben, dass das Schwenken oder Drehen oberhalb des Tisches 11 möglich wird. Das Schwenken kann ein Schwenken um 180° sein. Die Schwenkvorrichtung 21 verfährt die Bauplatte 2 unter die Adapterplatte 22.
- Befestigen der Bauplatte 2 an der Adapterplatte 22 mithilfe eines Fixiersystems. Die Befestigung ist ausreichend stark, um ein nachfolgendes Abtrennen der einzelnen Bauelemente 3 von der Bauplatte 2 und eine Bauplattenwiederaufbereitung zu ermöglichen.
- Lösen der Schwenkvorrichtung 21 von der Bauplatte 2.
- Verfahren einer Ablage 32 mit einem Bauelementauffangbehälter 31 unter die Bauplatte 2, wobei der Bauelementauffangbehälter 31 ein Granulatbad 30 umfasst. Die Ablage 32 ist ein zweiter linear verfahrbarer Tisch 32.
- Greifen und Anheben des Bauelementauffangbehälters 31 mithilfe der Schwenkvorrichtung 21, sodass die einzelnen Bauelemente 3 an der Bauplatte 2 in das Granulatbad 30 eintauchen, wobei das Granulatbad 30 dabei mit Druckgas beaufschlagt wird und in einem quasi flüssigen Zustand ist.
- Beenden der Druckgasspülung des Granulatbads 30, sodass das Granulatbad 30 in einen quasi festen Zustand kommt und die einzelnen Bauelemente 3 in dem Granulatbad 30 fixiert sind, um von Scherkräften in einem anschließenden Trennprozess nicht verschoben zu werden.
- Abtrennen der einzelnen Bauelemente 3 von der Bauplatte 2 mithilfe einer Sägevorrichtung 40. Die Sägevorrichtung 40 auf wird weiter unten detaillierter mit Bezug zu den Figuren 2 und 3 erläutert.
- Absenken des Bauelementauffangbehälters 31 mithilfe der Schwenkvorrichtung 21. Der Bauelementauffangbehälter 31 enthält die gerade abgetrennten einzelnen Bauelemente 3.
- Absetzen des Bauelementauffangbehälters 31 auf der Ablage 32 (zweiter linear verfahrbarer Tisch).
- Verfahren der Ablage 32 mit dem Bauelementauffangbehälter 31 aus der Manövrierstation 20 in eine Ausgangsstation 33.
- Ausgeben des Bauelementauffangbehälters 32 mit den einzelnen Bauelementen 3 aus der Ausgangsstation 33 mithilfe des mobilen Transportmittels.
- Verfahren einer kopfüber gelagerten Bauplattenwiederaufbereitungsstation relativ und hier unter die an der Adapterplatte 22 befestigten Bauplatte 2.
- Mechanische Bearbeitung (Fräsen, Schleifen, Polieren oder ähnliches) der Bauplatte 2 mithilfe der Bauplattenwiederaufbereitungsstation.
- Greifen der Bauplatte 2 mithilfe der Schwenkvorrichtung 21.
- Lösen der Bauplatte 2 von der Adapterplatte 22.
- Schwenken (hier um 180°) und Transportieren der Bauplatte 2 mithilfe der Schwenkvorrichtung 21 zurück in den Baubehälter 12.
- Lösen der Schwenkvorrichtung 21 von der Bauplatte 2.
- Greifen des Baubehälters 12 mithilfe der Schwenkvorrichtung 21. Die Schwenkvorrichtung 21 greift den Baubehälter 12 samt fixierter Bauplatte 2 und hebt den Baubehälter 12 so weit an, dass der erste linear verfahrbare Tisch 11 unter den Baubehälter 12 gefahren werden kann.
- Positionieren des Baubehälters 12 auf dem ersten linear verfahrbaren Tisch 11 mithilfe der Schwenkvorrichtung 21.
- Verfahren des Tisches 11 mit dem Baubehälter und der Bauplatte 2 von der Manövrierstation 20 zurück in die Eingangsstation 10.

Die **Figuren 2** **und** **3** zeigen Detailansichten der Sägevorrichtung 40 zum Abtrennen der einzelnen Bauelemente 3 von der Bauplatte 2. Die Sägevorrichtung 40 ist hier eine Diamantdrahtsäge, der Schneiddraht 41 ist hier ein hartstoffbeschichteter Draht.

Die Sägevorrichtung 40 umfasst eine Antriebsspule 42 und eine Gegenspule 43. Die Antriebsspule 42 ist zum Wickeln des Schneiddrahts 41 in eine erste Richtung gestaltet. Die Gegenspule 43 ist zum Spannen des Schneiddrahts 41 in eine entgegengesetzte, zweite Richtung gestaltet.

Die Sägevorrichtung 40 funktioniert, in dem der Schneiddraht 41 auf- und abgewickelt wird. Der Schneiddraht 41 kann dabei mehrere Kilometer lang sein. Während des Sägevorgangs wird der Schneiddraht 41 jedoch nicht in seiner vollen Länge auf und abgewickelt, sondern nur ein bestimmter Drahtabschnitt, der nur wenige 100 m lang sein kann. Bevorzugt werden nur zwischen 1 und 10 % der Gesamtlänge des Schneiddrahts 41 für einen aktuellen Schnittvorgang eingesetzt, weiter bevorzugt zwischen 1 und 5 % der Gesamtlänge des Schneiddrahts 41.

Der Schneiddraht 41 wird auf die Antriebsspule 42 in der ersten Bewegungsrichtung (hier im Uhrzeigersinn) mit einem Drehmoment M₂ aufgewickelt. Dabei bestimmt die aufwickelnde Achse der Antriebsspule 42 die Winkelgeschwindigkeit oder Spulendrehzahl n₂. Die Gegenspule 43, welche zum Abwickeln des Schneiddrahts 41 in der zweiten, entgegengesetzten Bewegungsrichtung (hier gegen den Uhrzeigersinn) gestaltet ist, bewirkt ein definiertes Gegendrehmoment M₁ bei einer Winkelgeschwindigkeit oder Spulendrehzahl n₁. Die Schnittgeschwindigkeit v des Schneiddrahts 41 kann durch eine Geschwindigkeitsregelung mit Feedbacksignal der Drahtgeschwindigkeit an einer mit einem Geschwindigkeitssensor 44 versehenen Umlenkrolle 45 gemessen und, wenn gewünscht, konstant gehalten werden. Die Schnittgeschwindigkeit ist frei einstellbar, auch während eines Schneidvorgangs.

Das Gegendrehmoment M₁ der Gegenspule 43 wird permanent geregelt, um eine konstante Drahtspannung σ_{S} im Schneiddraht 41 zu bewirken. Das für die konstante Drahtspannung σ_{S} im Schneiddraht 41 notwendige Gegendrehmoment M₁ der Gegenspule 43 kann aus dem momentanen Gesamtspulendurchmesser der abwickelnden Gegenspule 43 mitsamt dem momentan aufgewickelten Schneiddraht 41 berechnet werden. Der momentane Gesamtspulendurchmesser der Gegenspule 43 mitsamt momentan aufgewickeltem Schneiddraht 41 kann aus der aktuellen Drahtgeschwindigkeit und der aktuellen Spulendrehzahl n₁ der Gegenspule 43 berechnet werden. Die aktuelle Drahtgeschwindigkeit oder Schnittgeschwindigkeit v des Schneiddrahts 41 kann von einem Geschwindigkeitssensor 44 oder Encoder in einer Umlenkrolle 45; 49 ermittelt werden. Die aktuelle Spulendrehzahl n₁ der Gegenspule 43 kann durch einen Drehzahlsensor 46 oder Encoder in der Gegenspule 43 ermittelt werden. σ_{C} ist die resultierende Spannung aus der Schnittkraft.

Das Verarbeitungsmodul 1 umfasst eine Steuereinheit (nicht gezeigt), die aus der momentanen Schnittgeschwindigkeit des Schneiddrahts 41 und der momentanen Spulendrehzahl n₁ der Gegenspule 43 den momentanen Gesamtspulendurchmesser der Gegenspule 43 mitsamt momentan aufgewickeltem Schneiddraht 41 berechnet. Die Steuereinheit berechnet weiterhin aus dem momentanen Gesamtspulendurchmesser der Antriebsspule 42 kontinuierlich ein gewünschtes Antriebsmoment der Gegenspule 43 für eine konstante Drahtspannung des Schneiddrahts 41 während eines Schneidvorgangs. In anderen Worten, die Steuereinheit verwendet das berechnete Antriebsmoment der Gegenspule 43 zur Steuerung einer konstanten Drahtspannung des Schneiddrahts 41 während eines Schneidvorgangs. Die Steuereinheit kann das berechnete Antriebsmoment der Gegenspule 43 auch zur Steuerung einer konstanten Schnittgeschwindigkeit v des Schneiddrahts 41 während eines Schneidvorgangs verwenden.

Die Steuereinheit kann zumindest die Gegenspule 43 weiterhin so steuern, dass die Drahtspannung σ_{S} des Schneiddrahts 41 permanent und damit auch im ruhenden Zustand der Sägevorrichtung 40 und/oder bei einem Wechsel der Schneidrichtung konstant bleibt. Ein Wechsel der Schneidrichtung bedeutet, dass die bisher aufwickelnde Spule abwickelt und die bisher abwickelnde Spule aufwickelt. Die Antriebsspule 42 und die Gegenspule 43 sind zum Wechsel ihrer Aufgaben gestaltet, sodass der Schneiddraht 41 zum Schneiden abwechselnd in die erste Richtung und die zweite Richtung gewickelt werden kann.

Um den Schneiddraht 41 möglichst geordnet und verschleißfrei auf- und wieder abzuwickeln, können die Antriebsspule 42 und die Gegenspule 43 gegeneinander auf und ab bewegt werden. Das Verarbeitungsmodul 1 umfasst dafür eine Pendelvorrichtung für die Antriebsspule 42 und die Gegenspule 43, die gestaltet ist, um die Antriebsspule 42 und die Gegenspule 43 senkrecht zur Schnittrichtung des Schneiddrahts 41 auf und ab zu bewegen. Die Pendelvorrichtung kann die Pendelbewegung der Antriebsspule 42 und der Gegenspule 43 in Abhängigkeit von einer momentanen Schnittgeschwindigkeit v des Schneiddrahts 41 steuern. Die Pendelvorrichtung kann die Antriebsspule 42 und die Gegenspule 43 auch unabhängig voneinander bewegen, sodass unterschiedliche Schneidwinkel möglich sind.

Das Verarbeitungsmodul 1 umfasst weiterhin eine Verschleißüberwachungsvorrichtung, die eine Schnittkraft des Schneiddrahts 41 während eines Schneidvorgangs misst und auf Grundlage der gemessenen Schnittkraft eine Aussage über einen aktuellen Verschleiß des Schneiddrahts 41 ausgeben kann. Aus einer zunehmenden Schnittkraft lässt sich ein zunehmender Drahtverschleiß ableiten. Ab einem bestimmten Drahtverschleiß kann ein bisher ungenutzter Drahtabschnitt verwendet werden. Dies kann so lange wiederholt werden, bis alle Drahtabschnitte im Eingriff waren. Der Schneiddraht 41 unterliegt damit einem abschnittsweisen Verschleiß.

Das Verarbeitungsmodul 1 umfasst weiterhin eine Drahtbruchüberwachungsvorrichtung, die eine Spulendrehzahl der Antriebsspule 42 und/oder eine Spulendrehzeit der Gegenspule 43 misst und auf Grundlage der gemessenen Spulendrehzahl eine Aussage über einen möglichen Drahtbruch ausgeben kann. Auf diese Weise werden beim Schneiden bzw. Sägen die Geschwindigkeiten von vorzugsweise beiden Spulen beobachtet, wodurch ein möglicher Drahtbruch sofort erkannt werden kann.

Die Antriebsspule 42 und die Gegenspule 43 können jeweils in einer eigenen Sägeeinheit 47 angeordnet sein. Die beiden Sägeeinheiten 47 können unabhängig voneinander linear verschieblich sein. Mithilfe von zum Beispiel Induktivsensoren 48 kann die Verschiebung der Sägeeinheiten so geregelt werden, dass unterschiedliche Schneidewinkel möglich sind. Zudem helfen die Sensoren 48 dabei zu große bzw. kritische Schneidewinkel zu vermeiden. Eines Weiterhin kann mithilfe der Sensoren 48 erkannt werden, ob ein Anschnitt des Bauteils vorliegt oder nicht.

Ergänzend sei darauf hingewiesen, dass "umfassend" und "aufweisend" keine anderen Elemente oder Schritte ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Ein Verarbeitungsmodul (1) für eine Bauplatte (2), umfassend
- eine Eingangsstation (10),
- eine Manövrierstation (20), und
- eine Sägevorrichtung (40),
wobei die Eingangsstation (10) eine Aufnahme (11) für eine Bauplatte (2) umfasst, wobei die Bauplatte (2) mehrere einzelne Bauelemente (3) bündelt, wobei die Manövrierstation (20) eine Schwenkvorrichtung (21) zum Transportieren und Schwenken der Bauplatte (2) umfasst, und
wobei das Verarbeitungsmodul (1) ferner ein druckgasbeaufschlagbares Granulatbad (30) zur Aufnahme und Fixierung der einzelnen Bauelemente (3) relativ zu der Bauplatte (2) umfasst, wobei das Granulatbad (30) in einem Ruhezustand in einem quasi festen Zustand ist und bei Beaufschlagung mit Druckgas in einem quasi flüssigen Zustand ist,
wobei die Sägevorrichtung (40) einen Schneiddraht (41) umfasst, um die einzelnen Bauelemente (3) von der Bauplatte (2) abzutrennen, wobei während des Abtrennens das Granulatbad (30) in einem quasi festen Zustand ist,
**dadurch gekennzeichnet, dass** das Verarbeitungsmodul (1) eine Pendelvorrichtung umfasst,
dass
die Sägevorrichtung (40) eine Antriebsspule (42) und eine Gegenspule (43) umfasst,
dass
die Antriebsspule (42) zum Wickeln des Schneiddrahts (41) in eine erste Richtung gestaltet ist, und die Gegenspule (43) zum Spannen des Schneiddrahts (41) in eine entgegengesetzte, zweite Richtung gestaltet ist, und dass die Pendelvorrichtung gestaltet ist, um die Antriebsspule (42) und/oder die Gegenspule (43) im Wesentlichen senkrecht zu einer Schnittrichtung des Schneiddrahts (41) unabhängig voneinander auf und ab zu bewegen, sodass unterschiedliche Schneidwinkel einstellbar sind.

2. Verarbeitungsmodul (1) nach Anspruch 1, wobei die Antriebsspule (42) und die Gegenspule (43) zum zyklischen Wechsel ihrer Aufgaben gestaltet sind, SE sodass der Schneiddraht (41) zum Schneiden abwechselnd in die erste Richtung und die zweite Richtung gewickelt wird.

3. Verarbeitungsmodul (1) nach einem der Ansprüche 1 oder 2, wobei nur zwischen 1 und 10 %, bevorzugt zwischen 1 und 5 % einer Gesamtlänge des Schneiddrahts (41) für einen aktuellen Schnittvorgang eingesetzt wird.

4. Verarbeitungsmodul (1) nach einem der Ansprüche 1-3, weiterhin umfassend eine Steuereinheit, die zum Steuern zumindest einer der Spulen für eine konstante Drahtspannung des Schneiddrahts (41) während eines Schneidvorgangs gestaltet ist.

5. Verarbeitungsmodul (1) nach einem der Ansprüche 1-4, weiterhin umfassend einen Geschwindigkeitssensor (44) zur Erfassung einer momentanen Schnittgeschwindigkeit des Schneiddrahts (41), wobei der Geschwindigkeitssensor (44) vorzugsweise an einer Umlenkrolle (45) der Sägevorrichtung (40) angeordnet ist.

6. Verarbeitungsmodul (1) nach einem der Ansprüche 1-5, weiterhin umfassend einen Drehzahlsensor (46) zur Erfassung einer momentanen Spulendrehzahl der Gegenspule (43).

7. Verarbeitungsmodul (1) nach einem der Ansprüche 4-6, wobei die Steuereinheit gestaltet ist, um aus der momentanen Schnittgeschwindigkeit des Schneiddrahts (41) und der momentanen Spulendrehzahl der Gegenspule (43) einen momentanen Gesamtspulendurchmesser der Gegenspule (43) mitsamt des momentan auf gewickelten Schneiddrahts (41) zu berechnen.

8. Verarbeitungsmodul (1) nach einem der Ansprüche 4-7, wobei die Steuereinheit weiterhin gestaltet ist, um aus dem momentanen Gesamtspulendurchmesser der Gegenspule (43) kontinuierlich ein gewünschtes Antriebsmoment der Gegenspule (43) für eine konstante Drahtspannung und/oder eine konstante Schnittgeschwindigkeit des Schneiddrahts (41) während eines Schneidvorgangs zu berechnen.

9. Verarbeitungsmodul (1) nach einem der Ansprüche 1-8, wobei zumindest eine der Spulen (42, 43) gestaltet ist, um eine definierte Drahtspannung des Schneiddrahts (41) auch in einem Ruhezustand der Sägevorrichtung (40) einzuhalten.

10. Verarbeitungsmodul (1) nach einem der Ansprüche 1-9, wobei die Sägevorrichtung (40) eine Drahtsäge mit einem Hartstoffdraht ist.

11. Verarbeitungsmodul (1) nach Anspruch 1, wobei die Pendelvorrichtung gestaltet ist, um die Bewegung der Antriebsspule (42) und/oder der Gegenspule (43) in Abhängigkeit von einer momentanen Schnittgeschwindigkeit des Schneiddrahts (41) zu steuern.

12. Verarbeitungsmodul (1) nach einem der Ansprüche 1-11, weiterhin umfassend eine Verschleißüberwachungsvorrichtung, die gestaltet ist um eine Schnittkraft des Schneiddrahts (41) während eines Schneidvorgangs zu messen und auf Grundlage der gemessenen Schnittkraft eine Aussage über einen aktuellen Verschleiß des Schneiddrahts (41) auszugeben, wobei sich aus einer zunehmenden Schnittkraft ein zunehmender Drahtverschleiß ableiten lässt.

13. Ein Verfahren zum Verarbeiten einer Bauplatte (2), umfassend die folgenden Schritte:
- -Bereitstellen eines Verarbeitungsmoduls (1) mit einer Eingangsstation (10), einer Manövrierstation (20), und einer Sägevorrichtung (40) , wobei die Sägevorrichtung (40) einen Schneiddraht (41) umfasst,
- Einbringen einer Bauplatte (2) in eine Aufnahme (11) der Eingangsstation (10), wobei die Bauplatte (2) mehrere einzelne Bauelemente (3) bündelt,
- Transportieren und/oder Schwenken der Bauplatte (2) mithilfe einer Schwenkvorrichtung (21) in der Manövrierstation (20),
- Aufnehmen und Fixieren der einzelnen Bauelemente (3) relativ zu der Bauplatte (2) in einem druckgasbeaufschlagbares Granulatbad (30), wobei das Granulatbad (30) in einem Ruhezustand in einem quasi festen Zustand ist und bei Beaufschlagung mit Druckgas in einem quasi flüssigen Zustand ist, und
- Abtrennen der einzelnen Bauelemente (3) von der Bauplatte (2), wobei während des Abtrennens das Granulatbad (30) in einem quasi festen Zustand ist **dadurch gekennzeichnet, dass** eine Pendelvorrichtung bereitgestellt wird, dass die Sägevorrichtung (40) eine Antriebsspule (42) und eine Gegenspule (43) umfasst, wobei die Antriebsspule (42) zum Wickeln des Schneiddrahts (41) in eine erste Richtung gestaltet ist und die Gegenspule (43) zum Spannen des Schneiddrahts (41) in eine entgegengesetzte, zweite Richtung gestaltet ist, und dass die Pendelvorrichtung gestaltet ist, um die Antriebsspule (42) und/oder die Gegenspule (43) im Wesentlichen senkrecht zu einer Schnittrichtung des Schneiddrahts (41) unabhängig voneinander auf und ab zu bewegen, sodass unterschiedliche Schneidwinkel einstellbar sind.

## Claims

1. A processing module (1) for a build plate (2), comprising
- an input station (10),
- a manoeuvring station (20), and
- a sawing device (40),
wherein the input station (10) comprises a reception (11) for a build plate (2), wherein the build plate (2) bundles a plurality of individual build elements (3), wherein the manoeuvring station (20) comprises a swiveling device (21) for transporting and swiveling the build plate (2), and
wherein the processing module (1) further comprises a granular bath (30) which can be acted upon by compressed gas for receiving and fixing the individual build elements (3) relative to the build plate (2), wherein the granular bath (30) is in a rest state in a quasi-solid state and is in a quasi-liquid state when acted upon by compressed gas,
wherein the sawing device (40) comprises a cutting wire (41) for separating the individual build elements (3) from the build plate (2), wherein during the separation the granular bath (30) is in a quasi-solid state,
**characterized in that** the processing module (1) comprises a pendulum device, wherein the sawing device (40) comprises a drive spool (42) and a counter spool (43),
wherein the drive spool (42) is adapted to wind the cutting wire (41) in a first direction, and
wherein the counter spool (43) is configured for tensioning the cutting wire (41) in an opposite, second direction, and
wherein the pendulum device is configured to move the drive spool (42) and/or the counter spool (43) independently of each other so that different cutting angles can be set.

2. Processing module (1) according to claim 1, wherein the drive spool (42) and the counter spool (43) are configured to cyclically change their tasks so that the cutting wire (41) is wound alternately in the first direction and the second direction for cutting.

3. Processing module (1) according to one of the claims 1 or 2, whereby only between 1 and 10%, preferably between 1 and 5% of a total length of the cutting wire (41) is used for a current cutting operation.

4. Processing module (1) according to one of the claims 1-3, further comprising a control unit adapted to control at least one of the spools for a constant wire tension of the cutting wire (41) during a cutting operation.

5. Processing module (1) according to one of the claims 1-4, further comprising a speed sensor (44) for detecting an instantaneous cutting speed of the cutting wire (41), wherein the speed sensor (44) is preferably arranged on a deflection pulley (45) of the sawing device (40).

6. Processing module (1) according to one of the claims 1-5, further comprising a rotational speed sensor (46) for detecting an instantaneous spool rotational speed of the counter spool (43).

7. Processing module (I) according to any one of claims 4-6, wherein the control unit is configured to determine, from the instantaneous cutting speed of the cutting wire (41) and the instantaneous spool speed of the counter spool (43) an instantaneous total spool diameter of the counter spool (43).

8. Processing module (1) according to one of the claims 4-7, wherein the control unit is further configured to continuously calculate from the instantaneous total spool diameter of the counter spool (43) a desired driving torque of the counter spool (43) for a constant wire tension and/or a constant cutting speed of the cutting wire (41) during a cutting operation.

9. Processing module (1) according to one of the claims 1-8, wherein at least one of the spools (42, 43) is configured to maintain a defined wire tension of the cutting wire (41) also in a rest state of the sawing device (40).

10. Processing module (1) according to one of the claims 1-9, wherein the sawing device (40) is a wire saw with a hard material wire.

11. Processing module (1) according to claim 1, wherein the pendulum device is configured to control the movement of the drive spool (42) and/or the counter spool (43) depending on an instantaneous cutting speed of the cutting wire (41).

12. Processing module (1) according to anyone of the claims 1-11, further comprising a wear monitoring device, which is configured to measure a cutting force of the cutting wire (41) during a cutting operation and to output an indication of an actual wear of the cutting wire (41) based on the measured cutting force, wherein increasing wire wear can be inferred from an increasing cutting force.

13. A method for processing a build plate (2), comprising the following steps:
- providing a processing module (1) having an input station (10), a manoeuvring station (20), and a sawing device (40), wherein the sawing device (40) comprises a cutting wire (41),
- inserting a build plate (2) into a reception (11) of the input station (10), the build plate (2) bundling a plurality of individual build elements (3),
- transporting and/or swiveling the build plate (2) by means of a swiveling device (21) in the manoeuvring station (20),
- receiving and fixing the individual build elements (3) relative to the build plate (2) in a granular bath (30) which can be acted upon by compressed gas, wherein the granular bath (30) is in a quasi-solid state in a rest state and is in a quasi-fluid state when acted upon by compressed gas,
- separating the individual build elements (3) from the build plate (2), wherein during the separation the granular bath (30) is in a quasi-solid state, **characterized in that** a pendulum device is provided,
wherein the saw device (40) comprises a drive spool (42) and a counter spool (43),
wherein the drive spool (42) is adapted to wind the cutting wire (41) in a first direction and the counter spool (43) is adapted to tension the cutting wire (41) in an opposite, second direction, and
wherein the pendulum device is adapted to move the drive spool (42) and/or the counter spool (43) up and down substantially perpendicular to a cutting direction of the cutting wire (41) independently of each other so that different cutting angles are adjustable.

## Revendications

1. Module de traitement (1) pour une plaque de base (2), comprenant
- une station d'entrée (10),
- une station de manœuvre (20), et
- un moyen de scie (40),
dans lequel la station d'entrée (10) comprend un logement (11) pour une plaque de base (2), dans lequel la plaque de base (2) regroupe plusieurs éléments de base individuels (3), dans lequel la station de manœuvre (20) comprend un moyen de pivotement (21) destiné à transporter et pivoter la plaque de base (2), et
dans lequel le module de traitement (1) comprend en outre un bain de granulats (30) qui peut être alimenté en gaz comprimé pour recevoir et fixer les éléments de base individuels (3) par rapport à la plaque de base (2), dans lequel le bain de granulats (30) dans un état de repos est dans un état quasiment solide et lors de l'alimentation en gaz comprimé est dans un état quasiment liquide,
dans lequel le moyen de scie (40) comprend un fil de coupe (41) pour séparer les éléments de base individuels (3) de la plaque de base (2), dans lequel pendant la séparation le bain de granulats (30) est dans un état quasiment solide,
**caractérisé en ce que** le module de traitement (1) comprend un moyen pendulaire,
**en ce que** le moyen de scie (40) comprend une bobine d'entraînement (42) et une contre-bobine (43),
**en ce que** la bobine d'entraînement (42) est configurée pour enrouler le fil de coupe (41) dans une première direction, et la contre-bobine (43) est configurée pour tendre le fil de coupe (41) dans une seconde direction opposée, et
**en ce que** le moyen pendulaire est configuré pour déplacer dans un mouvement de va-et-vient la bobine d'entraînement (42) et/ou la contre-bobine (43) sensiblement perpendiculairement à une direction de coupe du fil de coupe (41) indépendamment l'une de l'autre, de manière à pouvoir régler des angles de coupe différents.

2. Module de traitement (1) selon la revendication 1, dans lequel la bobine d'entraînement (42) et la contre-bobine (43) sont configurées pour changer leurs fonctions de manière cyclique de telle sorte que le fil de coupe (41) est enroulé pour couper de manière alternée dans la première direction et la deuxième direction.

3. Module de traitement (1) selon une des revendications 1 ou 2, dans lequel seulement entre 1 et 10 %, de préférence entre 1 et 5 %, d'une longueur totale du fil de coupe (41) est utilisée pour un processus de coupe en cours.

4. Module de traitement (1) selon une des revendications 1 à 3, comprenant en outre une unité de commande qui est configurée pour commander au moins une des bobines pour une tension de fil constante du fil de coupe (41) pendant un processus de coupe.

5. Module de traitement (1) selon une des revendications 1 à 4, comprenant en outre un détecteur de vitesse (44) pour détecter une vitesse de coupe instantanée du fil de coupe (41), dans lequel le détecteur de vitesse (44) est de préférence disposé sur une poulie de renvoi (45) du moyen de scie (40).

6. Module de traitement (1) selon une des revendications 1 à 5, comprenant en outre un capteur de régime (46) pour détecter un régime de bobine instantané de la contre-bobine (43).

7. Module de traitement (1) selon une des revendications 4 à 6, dans lequel l'unité de commande est configurée pour calculer, à partir de la vitesse de coupe instantanée du fil de coupe (41) et du régime de bobine instantané de la contre-bobine (43), un diamètre de bobine total instantané de la contre-bobine (43) conjointement avec le fil de coupe instantané (41) enroulé.

8. Module de traitement (1) selon une des revendications 4 à 7, dans lequel l'unité de commande est en outre configurée pour calculer en continu, à partir du diamètre de bobine total instantané de la contre-bobine (43), un couple d'entraînement souhaité de la contre-bobine (43) pour une tension de fil constante et/ou une vitesse de coupe constante du fil de coupe (41) pendant un processus de coupe.

9. Module de traitement (1) selon une des revendications 1 à 8, dans lequel au moins une des bobines (42, 43) est configurée pour respecter une tension de fil définie du fil de coupe (41) même dans un état de repos du moyen de scie (40).

10. Module de traitement (1) selon une des revendications 1 à 9, dans lequel le moyen de scie (40) est une scie à fil avec un fil en matériau dur.

11. Module de traitement (1) selon la revendication 1, dans lequel le moyen pendulaire est configuré pour commander le mouvement de la bobine d'entraînement (42) et/ou de la contre-bobine (43) en fonction d'une vitesse de coupe instantanée du fil de coupe (41).

12. Module de traitement (1) selon une des revendications 1 à 11, comprenant en outre un moyen de surveillance d'usure qui est configuré pour mesurer une force de coupe du fil de coupe (41) pendant un processus de coupe et, sur la base de la force de coupe mesurée, pour indiquer une usure en cours du fil de coupe (41), une usure de fil croissante pouvant être déduite à partir d'une force de coupe croissante.

13. Procédé de traitement d'une plaque de base (2), comprenant les étapes suivantes :
- fourniture d'un module de traitement (1) avec une station d'entrée (10), une station de manœuvre (20) et un moyen de scie (40), dans lequel le moyen de scie (40) comprend un fil de coupe (41),
- introduction d'une plaque de base (2) dans un logement (11) de la station d'entrée (10), la plaque de base (2) regroupant plusieurs éléments de base individuels (3),
- transport et/ou pivotement de la plaque de base (2) à l'aide d'un moyen de pivotement (21) dans la station de manœuvre (20),
- réception et fixation des éléments de base individuels (3) par rapport à la plaque de base (2) dans un bain de granulats (30) alimenté en gaz comprimé, le bain de granulats (30) dans un état de repos étant dans un état quasiment solide et lors de l'alimentation en gaz comprimé est dans un état quasiment liquide, et
- séparation des éléments de base individuels (3) de la plaque de base (2), le bain de granulats (30) pendant la séparation étant dans un état quasiment solide,
**caractérisé en ce qu'**un moyen pendulaire est fourni, **en ce que** le moyen de scie (40) comprend une bobine d'entraînement (42) et une contre-bobine (43), dans lequel la bobine d'entraînement (42) est configurée pour enrouler le fil de coupe (41) dans une première direction, et la contre-bobine (43) est configurée pour tendre le fil de coupe (41) dans une seconde direction opposée, et
**en ce que** le moyen pendulaire est configuré pour déplacer dans un mouvement de va-et-vient la bobine d'entraînement (42) et/ou la contre-bobine (43) sensiblement perpendiculairement à une direction de coupe du fil de coupe (41) indépendamment l'une de l'autre, de manière à pouvoir régler des angles de coupe différents.
